# EUROPEAN PATENT APPLICATION

(11) **EP 1 752 709 A2**
(43) Date of publication of application: **14.02.2007**
(21) Application number: 06254130.5
(22) Date of filing: 07.08.2006
(51) Int. Cl.: F23R 3/20, F02K 3/08

(54) **Reheat combustion in gas turbine systems**

(30) Priority: 10.08.2005 US 201497
(71) Applicant: General Electric Company, Schenectady, NY 12345 (US)
(72) Inventor: Goldmeer, Jeffrey Scott, Latham, New York 12110 (US); Haynes, Joel Meier, Niskayuna, New York 12309 (US)
(74) Representative: Bedford, Grant Richard

(57) **Abstract**

A gas turbine system (10) is provided. The gas turbine system (10) includes a compressor assembly (14) configured to compress ambient air and a combustor (16) in flow communication with the compressor assembly (14), the combustor (16) being configured to receive compressed air from the compressor assembly (14) and to combust a first fuel stream to generate a combustor exit gas stream. The gas turbine system (10) includes a first turbine (18) located downstream of the combustor (16) and configured to partially expand the combustor exit gas stream and a reheating device (12) in flow communication with the first turbine (18). The reheating device (12) is configured to introduce a second fuel stream in a transverse direction to a working gas stream from the first turbine (18) for combusting the fuel in presence of the working gas stream. The gas turbine system (10) also includes a second turbine (20) configured to expand an exit gas stream from the reheating device (12). The reheating device (12) comprises a plurality of injectors (120) disposed between the first and second turbines (18,20).

## Description

The invention relates generally to gas turbine systems, and particularly to reheat combustion in gas turbine systems for enhancing the efficiency of such systems.

Various types of gas turbine systems are known and are in use. For example, aeroderivative gas turbines are employed for applications such as power generation, marine propulsion, gas compression, cogeneration, offshore platform power and so forth. Typically, the gas turbines include a compressor for compressing an air flow and a combustor that combines the compressed air with fuel and ignites the mixture to generate a working gas. Further, the working gas is expanded through a turbine for power generation. In general, the power output for the gas turbine system is proportional to the temperature of working gas in the turbine. In certain aeroderivative gas turbines, the turbine exhaust temperature is relatively low, thereby limiting the efficiency of such systems for use in combined cycle power generation.

Many specific techniques have been employed to enhance the efficiency of gas turbine systems by increasing the temperature of the working gas. For example, in some systems the temperature of the working gas is increased in the combustor. Unfortunately, high temperatures in the combustor may result in relatively higher pollutant emissions such as NOₓ emissions. In addition, increasing the operating temperature in the combustor increases the thermal stress on the components. As a result, the components may be required to be manufactured to withstand higher temperatures, thereby leading to increased manufacturing costs.

In certain other systems, the exhaust gas from the turbine is mixed with a fuel to allow a secondary combustion reaction. This exothermic reaction adds energy to the working gas stream thereby increasing the power and efficiency of the gas turbine system. Unfortunately, undesirable amounts of NOₓ may be produced as a result of such secondary combustion reaction. In certain systems, a separate combustor may be included for the secondary combustion reaction. However, the cost of equipment and fuel associated with the secondary combustion is relatively high. Moreover, such techniques generally may require substantial redesigns in the overall turbine system design, making adoption of the techniques quite limited.

Accordingly, it would be desirable to develop a gas turbine system that has enhanced power achieved through reheating of working gas within the gas turbine system. It will also be advantageous to develop a reheating device for a gas turbine system that enables low emissions within the system at high temperatures.

Briefly, according to one embodiment a gas turbine system is provided. The gas turbine system includes a compressor assembly configured to compress ambient air and a combustor in flow communication with the compressor assembly, the combustor being configured to receive compressed air from the compressor assembly and to combust a first fuel stream to generate a combustor exit gas stream. The gas turbine system includes a first turbine located downstream of the combustor and configured to partially expand the combustor exit gas stream and a reheating device in flow communication with the first turbine. The reheating device is configured to introduce a second fuel stream in a transverse direction to a working gas stream from the first turbine for combusting the fuel in presence of the working gas stream. The gas turbine system also includes a second turbine configured to expand an exit gas stream from the reheating device.

In another embodiment, a reheating device for a gas turbine system is provided. The reheating device includes at least one injector disposed between first and second turbines of the gas turbine system, wherein the at least one injector is configured to introduce a fuel stream in a transverse direction to a direction of flow of working gas stream between the first and second turbines and a fuel line coupled to the at least one injector for delivering the fuel stream to the injector.

In another embodiment, a method of operating a gas turbine system is provided. The method includes compressing air via a compressor to produce compressed air stream and combusting a first fuel stream in presence of the compressed air stream to generate a combustor exit gas stream. The method includes partially expanding the combustor exit gas stream in a first turbine to generate a first turbine exit gas stream and transversely introducing a second fuel stream in a combustion area located between the first turbine and a second turbine to generate a second turbine exit gas steam. The method also includes expanding the second turbine exit gas stream in the second turbine.

Various features, aspects, and advantages of the present invention will become better understood when the following detailed description is read with reference to the accompanying drawings in which like characters represent like parts throughout the drawings, wherein:
FIG. 1 is a diagrammatical illustration of a gas turbine system having a reheating device in accordance with aspects of the present technique;
FIG. 2 is a diagrammatical illustration of a simple cycle gas turbine system with reheat combustion in accordance with aspects of the present technique;
FIG. 3 is a diagrammatical illustration of a combined cycle gas turbine system with reheat combustion in accordance with aspects of the present technique;
FIG. 4 is a cross-sectional view of the gas turbine system of FIG. 1 having a reheating device in accordance with aspects of the present technique
FIG. 5 is a cross-sectional view of the reheating device employed in the gas turbine systems of FIGS. 1-4 in accordance with aspects of the present technique;
FIG. 6 is a diagrammatical illustration of the reheating device of FIG. 5 in accordance with aspects of the present technique;
FIG. 7 is a diagrammatical illustration of an exemplary configuration of the reheating device of FIG. 5 in accordance with aspects of the present technique;
FIG. 8 is a diagrammatical illustration of an exemplary configuration of the reheating device of FIG. 5 having a coolant passage in accordance with aspects of the present technique;
FIG. 9 is a diagrammatical illustration of another exemplary configuration of the reheating device of FIG. 5 having a coolant passage in accordance with aspects of the present technique;
FIG. 10 is a diagrammatical illustration of an exemplary annular pattern of the reheating device employed in the gas turbine systems of FIGS. 1-4 in accordance with aspects of the present technique;
FIG. 11 is a diagrammatical illustration of exemplary shapes of the reheating device of FIG. 5 in accordance with aspects of the present technique; and
FIG. 12 is a diagrammatical illustration of another gas turbine system having a reheating device in accordance with aspects of the present technique.

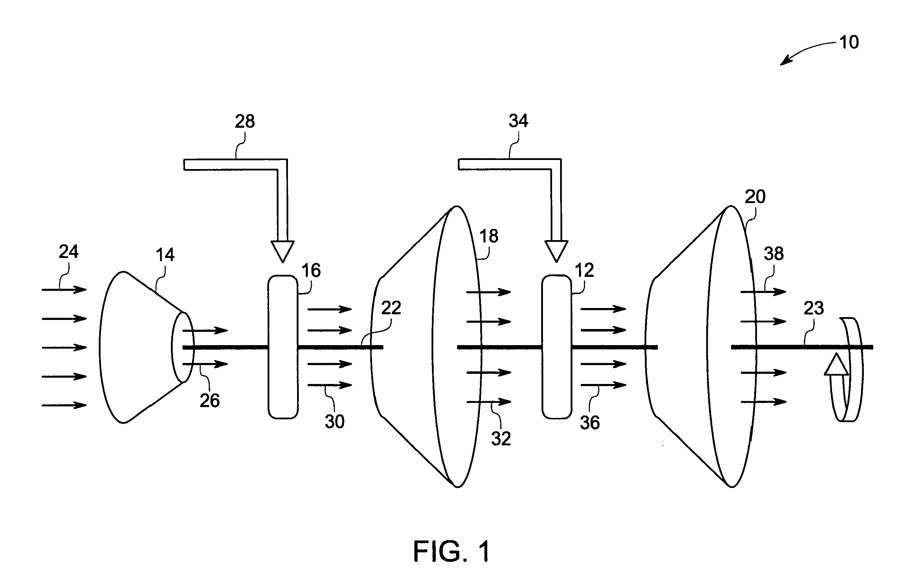

As discussed in detail below, various embodiments of the present technique function to enhance power output and efficiency of gas turbine systems such as simple cycle gas turbines and combined cycle gas turbine systems. In particular, the present technique includes utilizing reheat combustion between turbine stages of the gas turbine systems for enhancing the power output and efficiency of such systems. Turning now to drawings and referring first to FIG. 1 a gas turbine system 10 having a reheating device 12 is illustrated. The gas turbine system 10 includes a compressor assembly 14 and a combustor 16 in flow communication with the compressor assembly 14. Further, the gas turbine system 10 includes a first turbine 18 and a second turbine 20 located downstream of the combustor 16. In the illustrated embodiment, the compressor assembly 14 is driven by the power generated by the first turbine 18 via a shaft 22. Further, the second turbine 20 is configured to drive an external load. In the illustrated embodiment, a separate shaft 23 is coupled to the second turbine 20 to drive the external load. In one embodiment, the load is an electrical generator. Alternatively, the load is a mechanical drive application. Examples of such mechanical drive applications include a compressor for use in oil fields and a compressor for use in refrigeration.

In operation, the compressor assembly 14 receives a flow of ambient air 24 and compresses the flow of ambient air 24 to produce a flow of compressed air 26. The flow of compressed air 26 is then directed to the combustor 16 to combust a first fuel stream 28 and to generate a combustor gas stream 30. Moreover, the combustor gas stream 30 is partially expanded through the first turbine 18. In the illustrated embodiment a flow of the gas 32 from the first turbine 18 is directed to the reheating device 12. As illustrated, the reheating device 12 is in flow communication with the first turbine 18 and is configured to introduce a second fuel stream 34 in a transverse direction to the working gas stream 32 for combusting the second fuel stream 34 in presence of the working gas stream 32 to generate an exit gas stream 36. As used herein, the term "transverse" refers to a direction at right angles to the longitudinal axis. The exit gas stream 36 is subsequently expanded through the second turbine 20. The reheating device 12 employed for facilitating the reheat combustion between the first and second turbines 18 and 20 will be described in detail below.

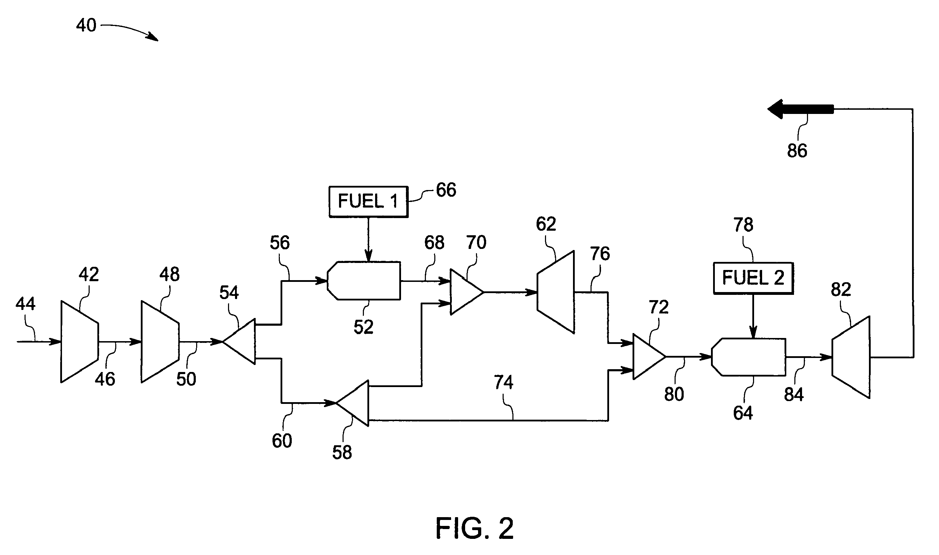

FIG. 2 is a diagrammatical illustration of a simple cycle gas turbine system 40 with reheat combustion in accordance with aspects of the present technique. In the illustrated embodiment, a boost compressor 42 receives a flow of air 44. Further, flow of air 46 from the boost compressor 42 is channeled towards a compressor assembly 48 for further compression. As will be appreciated by one skilled in the art, depending on the operational layout, the compressor assembly 48 may include a plurality of compressors for increasing the power output of the simple gas turbine system 40. For example, the gas turbine system 40 may include a low-pressure compressor and a high-pressure compressor. Alternatively, the gas turbine system 40 may include a low-pressure compressor, a medium-pressure compressor and a high-pressure compressor. The compressed air flow 50 from the compressor assembly 48 is directed towards a combustor 52. In a present embodiment, a splitter 54 is employed to split the flow 50 from the compressor assembly 48. As illustrated, a portion of the air flow 56 is directed towards the combustor 52. Further, an additional splitter 58 may be employed to split an air flow 60 from the splitter 54 to provide air flows to a first turbine 62 and a reheating device 64 disposed downstream of the first turbine 62.

In operation, the combustor 52 receives the air flow 56 from the compressor assembly 48. In addition, the combustor 52 also receives a first fuel stream 66 that is ignited to burn in the presence of the air flow 56 to generate a combustor exit gas stream 68 that is directed towards the first turbine 62. In certain embodiments, a mixer 70 may be employed to couple the flows from the combustor 52 and the splitter 58. In the illustrated embodiment, a second mixer 72 is employed to couple flows 74 and 76 from the splitter 58 and the first turbine 62, which is then supplied to the reheating device 64. Additionally, the reheating device 64 receives a second fuel stream 78 in a transverse direction to a flow of working gas 80 from the first turbine 62 for combusting the second fuel stream 78 in presence of the working gas stream 80. As will be appreciated by those skilled in the art, this second combustion reaction facilitates raising the temperature of the gas flow entering a second turbine 82 (often referred to as "power turbine") thereby enhancing the power output and efficiency of the gas turbine system 40. Further, the second turbine 82 is configured to expand an exit gas stream 84 from the reheating device 64 for driving an external load 86.

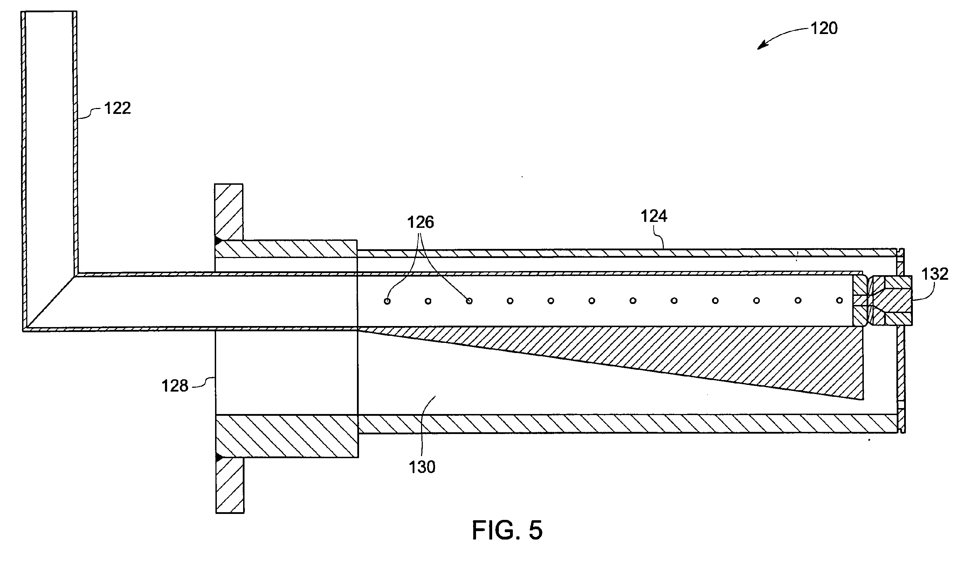

The reheating device 64 employed in the gas turbine system 40 is configured to increase the temperature of the gas flow without introducing high emissions. The details of the reheating device 64 will be described in a greater detail below with reference to FIGS. 5-11.

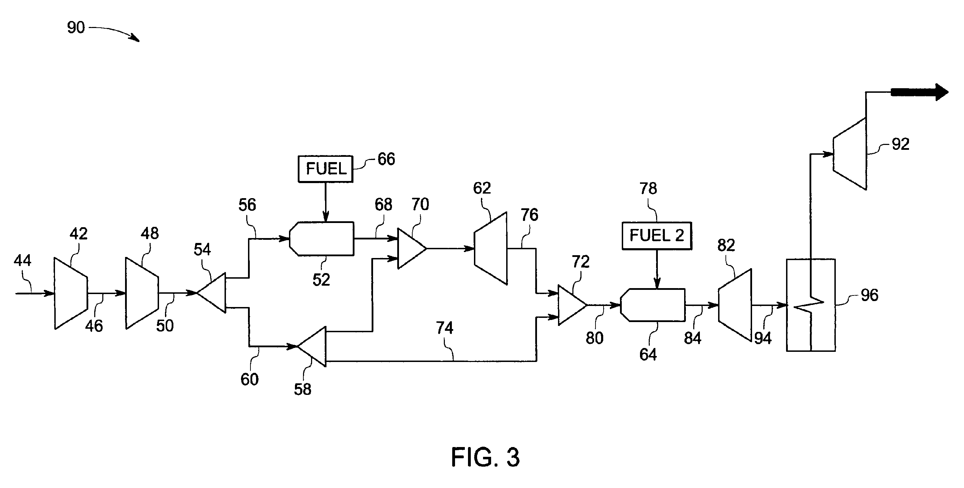

FIG. 3 is a diagrammatical illustration of a combined cycle gas turbine system 90 with reheat combustion in accordance with aspects of the present technique. In a presently contemplated configuration a steam turbine system 92 is coupled to the simple gas turbine system (see FIG. 2). As previously described, a reheating device 64 disposed intermediate the first and second turbines 62 and 82 functions to raise the temperature of the working gas in the combined cycle gas turbine system. In the illustrated embodiment, the steam turbine system 92 is configured to receive exhaust gases 94 from the second turbine 82. Further, a heat exchanger 96 may be employed to couple the heat from the exhaust gases 94 to a steam generating apparatus of the steam turbine system 92. Thus, the heat from the exhaust gases 94 from the gas turbine system 40 having the reheating device 64 is advantageously utilized to enhance the power output and efficiency of the combined cycle gas turbine system 90.

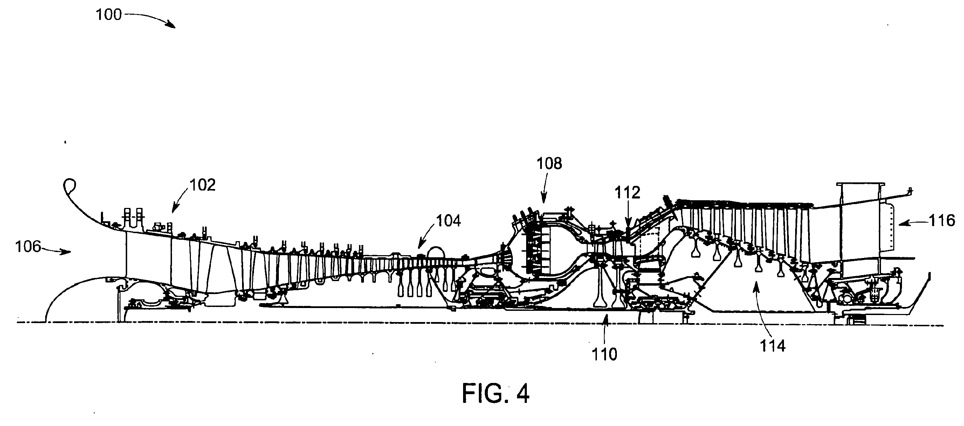

FIG. 4 is a cross-sectional view of an exemplary configuration 100 of the gas turbine system of FIG. 1 having a reheating device in accordance with aspects of the present technique. However, other configurations with various operational layouts of the components of the gas turbine system 100 with the reheating device are within the scope of the present application. In the illustrated embodiment, a compressor front frame 102 directs air flow into a compressor section 104 via bell mouth entrance 106. In certain embodiments, the compressor section 104 may be divided into low-pressure and high-pressure compressor regions. The compressor section 104 includes a stator casing that includes a plurality of stator vanes that direct air flow within a plurality of stages between the compressor section 104. Further, the compressor section 104 includes a plurality of rotating blades and includes spools and discs supporting the blades. The number of compressor stages in the compressor section 104 may be varied based upon the operational requirements of the gas turbine system 100.

In operation, compressed air from the compressor section 104 is directed to a combustor 108 to combust a fuel stream. In one embodiment, the combustor 108 includes an annular combustor. In an alternate embodiment, the combustor 108 includes a can-annular combustor. The combustor exit gas stream is then directed to a high-pressure turbine 110 where it is partially expanded. Subsequently, the working gas stream from the high-pressure turbine 110 is directed towards a reheating device 112. In a presently contemplated configuration, the reheating device 112 includes a plurality of injectors disposed between the high-pressure turbine 110 and a low-pressure turbine (power turbine) 114. In certain embodiments, the plurality of injectors are arranged in a pre-determined annular pattern and are located immediately downstream of the high-pressure turbine 110. In one embodiment, the plurality of injectors is positioned at an axial location that is substantially similar to the axial location of the high-pressure turbine 110.

The plurality of injectors 112 introduces a blend of fuel in a transverse direction to the entering turbine gas stream. The fuel stream includes a natural gas, or hydrogen, or syngas, or a hydrocarbon, or combinations thereof. In certain embodiments, the fuel stream is blended with a diluent. Examples of diluent include nitrogen, or steam, or carbon dioxide, or combinations thereof. However, other types of fuels having similar properties may be used. In a present embodiment, the injectors introduce the fuel blend via a plurality of injector holes disposed on either sides of the injectors to disperse the fuel and enable complete combustion of the fuel stream before entering the low-pressure turbine 114. The fuel blend autoignites in a reheat combustion area between the high-pressure and low-pressure turbines 110 and 114. Further, the exit gas stream from the reheating device 112 is expanded through the low-pressure turbine 114 where the high temperature, high velocity gas passes through a set of turbine blades. The blades extract energy from the hot, expanding air to drive the compressor section 114 and to drive an external load. The exhaust gases are vented through an exhaust duct 116. As described earlier, in certain embodiments, heat from the exhaust gases may be coupled to a steam turbine in a combined cycle gas turbine system for enhancing the power output and efficiency of the combined cycle gas turbine system. The reheating device 112 employed in the gas turbine system 100 will be explained in detail below.

FIG. 5 is a cross-sectional view of the reheating device 120 employed in the gas turbine systems of FIGS. 1-4 in accordance with aspects of the present technique. In the illustrated embodiment, the reheating device 120 includes a fuel injector. The fuel injector includes a fuel mixture passage 122 disposed within an injector casing 124. Additionally, the reheating device 120 includes a plurality of injector holes 126 disposed on either sides of the injector 120 for providing communication between the fuel mixture passage 122 and the working gas stream from the high-pressure turbine 110 (see FIG. 4). Particularly, the injector 120 provides a fuel stream in a transverse direction to the direction of the working gas stream from the high-pressure turbine 110. In this embodiment, the fuel stream is introduced in a reheat combustion area between the high-pressure and low-pressure turbines 110 and 114 (see FIG. 4). It should be noted that the spacing of the plurality of injector holes 126 may be selected such that the mass of the fuel mixture and the diluent mixture introduced in the reheat combustion area is proportional to the oxidants (e.g., oxidizing gases) in the reheat combustion area. In certain embodiments, a plurality of reheating devices may be arranged in a pre-determined annular pattern in the reheat combustion area between the turbines 110 and 114. Again, the spacing of the injector holes 26 may be adjusted based upon the diameter of the injector holes 126 and a distance from a coupling. For example, the spacing of the injector holes 126 may be increased as the distance from the coupling increases when the diameter of the holes 126 is maintained substantially constant.

In a presently contemplated configuration the reheating device 120 includes an inner wall 128 for defining a coolant passage 130. Further, the reheating device 120 includes air entrainment ports 132 for providing the air entrainment within the reheating device 120. In operation, a fuel mixture is provided to the reheating device 120 via the fuel mixture passage 122. In an alternate embodiment, the fuel mixture may be combined with a diluent. The fuel mixture passage 122 may be coupled to a fuel manifold (not shown) and to a diluent manifold (not shown) for providing the required fuel-diluent mixture in the passage 122.

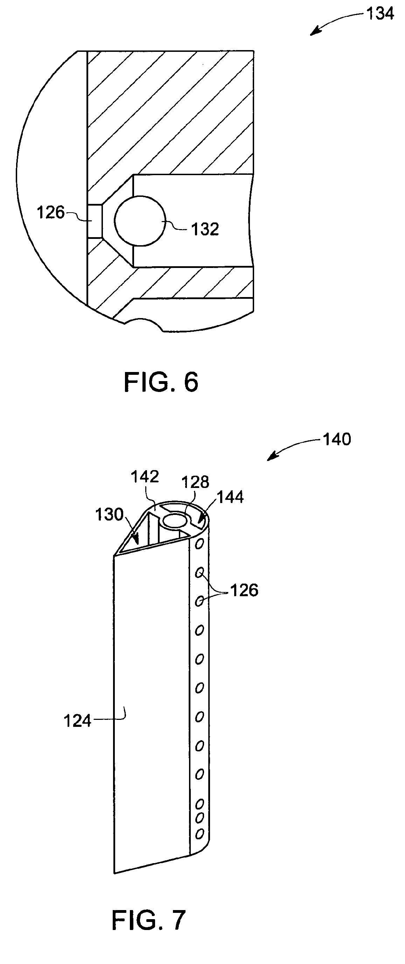

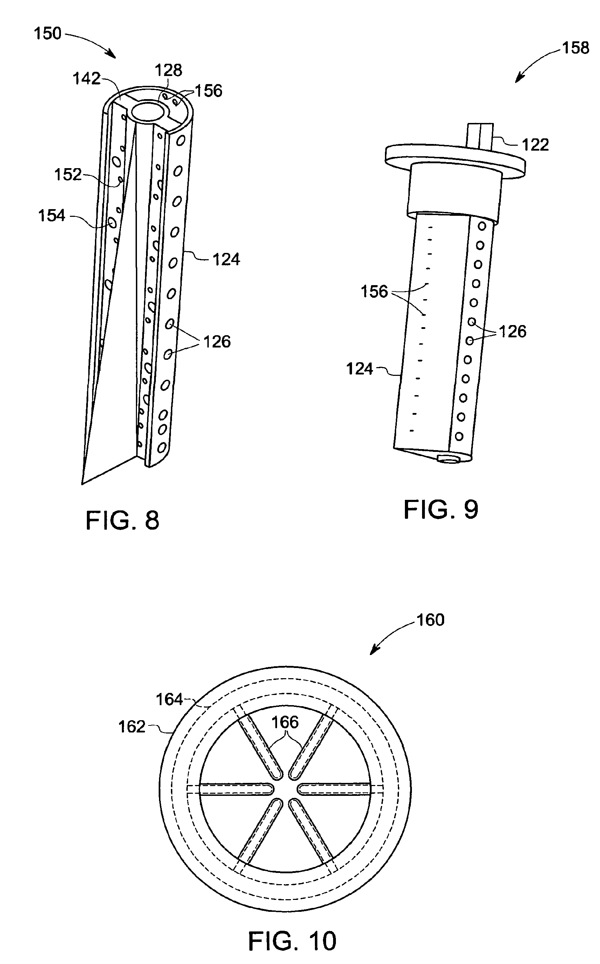

In one embodiment, the injector 120 employs a fuel mixture that provides cooling of the injector casing 124. More particularly, the fuel mixture lowers its heating value while preventing any premature auto ignition of the fuel mixture as it passes through the fuel mixture passage 122. In certain embodiments, the injector 120 may utilize a fuel mixture that ranges from being substantially only a fuel to a mixture having fuel premixed with air and/or a diluent. Further, the cooling of the casing 124 may be achieved via a coolant passage such as 130. In certain embodiments, an additional coolant passage may be provided in the injector 120 to achieve a desired cooling of the injector 120. Examples of injector configuration having additional coolant passages are illustrated below with reference to FIGS. 7 and 8.

FIG. 6 illustrates an exemplary configuration 134 of the reheating device employed in the gas turbine systems of FIGS. 1-4. As illustrated, the reheating device 134 includes injection holes as represented by 126. Further, air is entrained in the device 134 via the air entrainment port 132 for producing a fuel-air mixture that is introduced in a transverse direction to the direction of the entering turbine gas stream. FIG. 7 is a diagrammatical illustration of an exemplary configuration 140 of the reheating device of FIGS. 5 and 6 in accordance with aspects of the present technique. As illustrated, the reheating device 140 includes an inner wall 128 for defining the coolant passage 130. In addition, the reheating device 140 includes a mixer-containing element 142 between the casing 124 and the inner wall 128. In a present embodiment, the mixer-containing element 142 forms a second coolant passage 144. As will be appreciated by one skilled in the art a plurality of air entrainment ports may be positioned between the coolant passage 140 and the second coolant passage 144 as described below with reference to FIG. 8.

FIG. 8 illustrates an exemplary configuration 150 of the reheating device employed in the gas turbine systems of FIGS. 1-4. In a presently contemplated configuration the reheating device 150 includes a plurality of air entrainment ports152 between the coolant passage 130 and the second coolant passage 144. The air entrainment ports 152 are configured to distribute diluent between the coolant passages 130 and 144 to balance the supply of diluent with the reheating device 150. In certain embodiments, a plurality of pressure balancing ports 154 may be provided between the coolant passages 130 and 144. In addition, the wall 124 may further include holes 156 for creating a cooling film on the outer surface of the injector 150. In the illustrated embodiment, the holes 156 are located at the leading edge of the injector 150. In certain embodiment, the holes 156 may be located at the trailing edge of the injector 150 as illustrated below with reference to FIG. 9. However, other configurations of the injector 150 having holes 156 positioned at various locations to provide cooling of the outer surface of the injector 150 are within the scope of this technique.

FIG. 9 is a diagrammatical illustration of another exemplary configuration 158 of the reheating device employed in gas turbine systems of FIGS. 1-4. The reheating device 158 includes the inner wall 128 for defining the coolant passage 130 in addition to the fuel mixture passage 122 as illustrated before with reference to FIGS. 7 and 8. In a presently contemplated configuration, the injector hole 126 farthest from a coupling of the injector 158 is directed at an angle of about 45 degrees relative to the longitudinal axis of the injector 158. Thus, the entire area around the injector 158 receives a supply of the fuel mixture. Additionally, holes 156 are positioned downstream of the injector holes 126 in the wall 124 of the injector 158. In certain embodiments, the holes 156 may be positioned at a distance of about 1/2to 2/3 the distance from the injector holes 126 in the trailing edge.

The reheating devices illustrated above may be arranged in a pre-determined annular pattern between the first and second turbines of the gas turbine systems of FIGS. 1-4. FIG. 10 illustrates an exemplary annular pattern 160 of the reheating devices. In the illustrated embodiment, the assembly 160 includes a diluent manifold 162 and a fuel mixture manifold 164 adapted to provide diluent and fuel mixtures respectively to a plurality of injectors 166. In a present embodiment, the assembly 160 includes six injectors. However configurations with greater or lesser number of injectors 160 may be envisaged. In certain embodiments, the assembly 160 may include a combination of injectors 160 having varying sizes. In one embodiment, the assembly 160 may include alternating long and short injectors 166. The spatial distribution of the plurality of injectors 166 facilitates reduction of NOx formation in the reheat combustion area between the first and second turbines of the gas turbine system. For example, by using alternate long and short injectors 166 any blockage of mass flow may be reduced in the assembly 160.

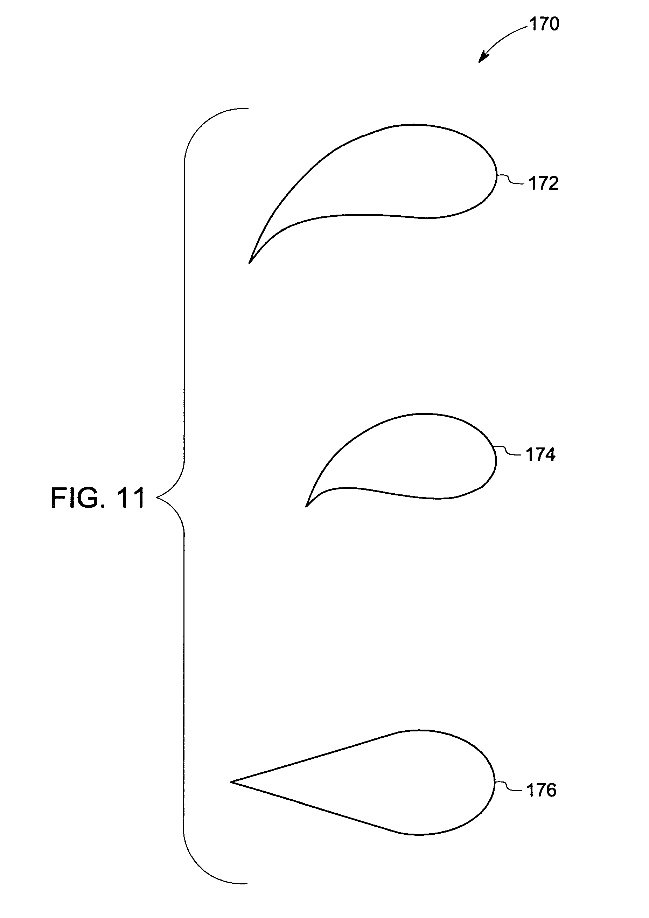

The reheating devices illustrated above with reference to FIGS. 5-10 are provided with an aerodynamic shape to facilitate a lifted flame generation. The lifted flame generation enables reduction of emissions in the reheat combustion area. FIG. 11 is a diagrammatical illustration of exemplary shapes 170 of the reheating device of FIGS. 5-9 in accordance with aspects of the present technique. As illustrated, the reheating devices may have a variety of profiles such as represented by 172, 174 and 176. In certain embodiments, the turning angles of the profiles 172, 174 and 176 may be adjusted as required by the gas turbine system to turn the flow that facilitates reduction of size, cost and weight of the gas turbine system. For example, each of the reheating devices may include a profile to create a pre-swirl.

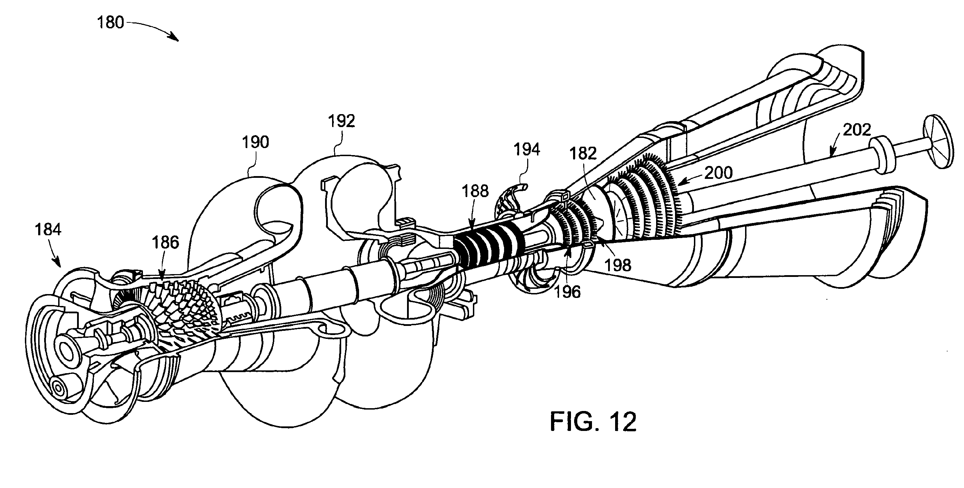

FIG. 12 illustrates another exemplary gas turbine system 180 having an exemplary reheat device 182 as illustrated above with reference to FIGS. 5-11. The gas turbine system 180 includes a radial inlet 184 to receive an air flow. Further, the gas turbine system 180 includes a low-pressure compressor 186 and a high-pressure compressor 188 for compressing the ambient air from the inlet 184. In the illustrated embodiment, the compressed air from the low-pressure compressor 186 is cooled in either an air-to-air or an air-to-water heat exchangers and are ducted to the high-pressure compressor 188 via ducts 190 and 192. The compressed air from the high-pressure compressor 188 is then combusted in a combustor 194. In a present embodiment, the combustor 194 includes a standard annular combustor. Further, the working gas stream from the combustor 194 is then directed to a high-pressure turbine 196. In addition, an intermediate pressure turbine 198 is disposed downstream of the high-pressure turbine 196 and is configured to drive the low-pressure compressor 188 through a mid shaft and flexible coupling.

In a presently contemplated configuration, the gas turbine system 180 further includes a power turbine 200 that drives an output shaft 202 for driving an external load. In this embodiment, the reheat device 182 may be positioned between the intermediate pressure turbine 198 and the power turbine 200 to create a reheat combustion area in addition to the primary combustion area 194. As described earlier, a plurality of injectors may be disposed between the turbines 198 and 200 and are configured to transversely inject a fuel to facilitate reheat combustion between the turbines 198 and 200. Again, different configurations may be envisaged for the reheat device 182 depending upon the operational layout and the requirements of the gas turbine system 180. The reheat combustion between the turbines 198 and 200 enhances the overall efficiency and the power output of the gas turbine system 180.

The various aspects of the method described hereinabove have utility in gas turbine systems, used for different applications. As noted above, reheat devices employed in the gas turbine system facilitate a transverse fuel injection in a reheat combustion area between the turbines of the gas turbine systems thereby enhancing the power output and efficiency of such systems. Further, the present technique enables reduction of emissions particularly NOx emissions from such gas turbine systems thereby facilitating the operation of the gas turbine systems in an environmentally friendly manner.

While only certain features of the invention have been illustrated and described herein, many modifications and changes will occur to those skilled in the art. It is, therefore, to be understood that the appended claims are intended to cover all such modifications and changes as fall within the true spirit of the invention.

### ELEMENT LIST

- 10: Gas turbine system
- 12: Reheating device
- 14: Compressor
- 16: Combustor
- 18: First turbine
- 20: Second turbine
- 22: Shaft
- 23: Shaft
- 24: Inlet air
- 26: Compressed air
- 28: First fuel stream
- 30: Working gas from combustor
- 32: Exit gas from first turbine
- 34: Second fuel stream
- 36: Exit stream from reheating device
- 38: Exit stream from second turbine
- 40: Simple gas turbine system
- 42: Boost
- 44: Inlet air
- 46: Flow to compressor assembly
- 48: Compressor assembly
- 50: Flow from the compressor assembly
- 52: Combustor
- 54: Splitter
- 56: Flow from splitter to combustor
- 58: Second splitter
- 60: Flow to second splitter
- 62: First turbine
- 64: Reheating device
- 66: First fuel stream
- 68: Combustor exit gas stream
- 70: Mixer
- 72: Second mixer
- 74: Flow from the splitter
- 76: Flow from the first turbine
- 78: Second fuel stream
- 80: Working gas stream
- 82: Second turbine
- 84: Exit gas stream
- 90: Combined cycle gas turbine system
- 92: Steam turbine
- 84: Flow to power turbine
- 94: Flow to heat exchanger
- 96: Heat exchanger
- 100: Gas turbine system
- 102: Front frame
- 104: Compressor section
- 106: Entrance for inlet air
- 108: Combustor
- 110: High-pressure turbine
- 112: Reheating device
- 114: Low-pressure turbine
- 116: Exhaust duct
- 120: Reheating device
- 122: Fuel mixture passage
- 124: Injector casing
- 126: Injector holes
- 128: Inner wall
- 130: Coolant passage
- 132: Air entrainment port
- 134: Injector configuration
- 140: Injector configuration
- 142: Mixer-containing element
- 144: Second coolant passage
- 150: Injector configuration
- 152: Air entrainment ports
- 154: Pressure balancing ports
- 156: Cooling holes
- 158: Injector configuration
- 160: Annular array of injectors
- 162: Diluent manifold
- 164: Fuel mixture manifold
- 166: Injectors
- 170: Exemplary profiles
- 172-176: Profiles with different turning angles
- 180: Gas turbine system
- 182: Reheating device
- 184: Inlet
- 186: Low-pressure compressor
- 188: High-pressure compressor
- 190-192: Ducts
- 194: Combustor
- 196: Intermediate pressure turbine
- 198: High-pressure turbine
- 200: Power turbine
- 202: Exhaust

## Claims

1. A gas turbine system (10), comprising:
a) a compressor assembly (14) configured to compress ambient air;
b) a combustor (16) in flow communication with the compressor assembly (14), the combustor (16) being configured to receive compressed air from the compressor assembly (14) and to combust a first fuel stream to generate a combustor exit gas stream;
c) a first turbine (18) located downstream of the combustor (16) and configured to partially expand the combustor exit gas stream;
d) a reheating device (12) in flow communication with the first turbine (18) and configured to introduce a second fuel stream in a transverse direction to a working gas stream from the first turbine (18) for combusting the fuel in presence of the working gas stream; and
e) a second turbine (20) configured to expand an exit gas stream from the reheating device (12).

2. The gas turbine system (10) of claim 1, wherein the reheating device (12) comprises a plurality of injectors disposed between the first and second turbines (18, 20).

3. The gas turbine system (10) of claim 1 or claim 2, wherein each of the plurality of injectors comprises a plurality of injector holes disposed on the injectors to introduce the second fuel stream for combustion before entering the second turbine (20).

4. The gas turbine system (10) of any preceding claim, wherein the second fuel stream comprises a natural gas, or hydrogen, or syngas, or a hydrocarbon, or combinations thereof.

5. The gas turbine system (10) of claim 4, wherein the second fuel stream is blended with a diluent.

6. The gas turbine system (10) of claim 5, wherein the diluent comprises nitrogen, or steam, or carbon dioxide, or combinations thereof.

7. A reheating device (12) for a gas turbine system (10), comprising:
a) at least one injector (120) disposed between first and second turbines (18, 20) of the gas turbine system (10), wherein the at least one injector (120) is configured to introduce a fuel stream in a transverse direction to a direction of flow of working gas stream between the first and second turbines (18, 20); and
b) a fuel line (122) coupled to the at least one injector (120) for delivering the fuel stream to the injector (120).

8. A method of operating a gas turbine system, comprising:
a) compressing air via a compressor to produce compressed air stream;
b) combusting a first fuel stream in presence of the compressed air stream to generate a combustor exit gas stream;
c) partially expanding the combustor exit gas stream in a first turbine to generate a first turbine exit gas stream;
d) transversely introducing a second fuel stream in a combustion area located between the first turbine and a second turbine to generate a second turbine exit gas steam; and
e) expanding the second turbine exit gas stream in the second turbine.

9. A method of improving efficiency of a gas turbine system, comprising:
a) coupling at least one injector to the gas turbine system, wherein the injector is configured to transversely inject a fuel stream between first and second turbines of the gas turbine system for reheating a working gas stream between the first and second turbines to generate an exit gas stream; and
b) expanding the exit gas stream in the second turbine.

10. A system for enhancing performance of a gas turbine system (10) having a first turbine section (18), comprising:
a) a second turbine section (20) in fluid communication with the first turbine section (18) of the gas turbine system (10); and
b) a reheating device (12) disposed between the first and second turbine sections (18, 20); wherein the reheating device (12) comprises at least one injector (120) configured to introduce a fuel stream in a transverse direction to a direction of flow of working gas stream between the first and second turbine sections (18, 20).
